# EUROPEAN PATENT APPLICATION

(11) **EP 2 146 422 A1**
(43) Date of publication of application: **20.01.2010**
(21) Application number: 08380173.8
(22) Date of filing: 06.06.2008
(51) Int. Cl.: H02K 53/00

(54) **Electromagnetic motor self-powered by an external AC/DC generator**

(71) Applicant: Salvador Olmo, Jose, 28047 Madrid (ES)
(72) Inventor: Salvador Olmo, Jose, 28047 Madrid (ES)
(74) Representative: Manzano Cantos, Gregorio

(57) **Abstract**

The invention relates to an electromagnetic motor self-powered by an AC/DC external generator, wherein an external source, either a battery or electric power system, electrically induces the electromagnets which being or being arranged in the form of a ring or ring and blade and regardless of their number and by means of a polarity control in charge of synchronizing the polarities of the electromagnets such that the equal polarity always exerts a repulsion force depending on the energy supplied to the electromagnets, and such electromagnets cause a rotation, both in one direction and the opposite direction, of the electromagnets by magnetically repelling one another, which electromagnets, being or being arranged in the form of a blade (5) housed inside the former, have the purpose of providing a driving force and of moving both external direct current and alternating current electric power alternators or generators and any other mechanical element connected directly or indirectly to the device and a potentiometer in charge of regulating the power supply to the electromagnets.

## Description

### Object of the Invention

In accordance with the title, the invention relates to power propulsion, generator and reciprocating motors in their full field of application, size and power. Therefore the technical field the invention is applied to is none other than current electric generator/reciprocating motors and propulsion motors using fuels derived from oil for generating both electrical and propulsion power.

Therefore, the object of the invention is a device that can be used as an electric generator/alternator and propulsion motor, which comprises the use of electromagnets, the first one in a ring and the second one in a ring or blade, the purpose of which is to move a central shaft which, connected by any direct or indirect system, in turn moves a known external AC/DC electric generator, which is responsible for supplying the electric power for external consumption and the power for self-operation, regulated by a potentiometer, for increasing the energy power; having polarization controllers in the first ring, in which it is possible to reverse the polarity according to the needs of the assembly, synchronizing them electronically or mechanically by means of sensors placed in a second internal ring or second assembly of electromagnets. The assembly has been confined in a casing which isolates the electromagnetic energy, having any type of shape and size so that it can be adapted to any use. The most common shape would be that of coaxially assembled rings forming modular bases, or else coaxially assembled cylinders also forming modular bases. The motor of the invention uses the electric power for self-powering, continuously generating it and re-powering itself, conferring the assembly enormous versatility with practical uses and an almost complete autonomy, since it depends on an external connection, power source, either a battery or the electrical network, to begin to operate for a theoretically unlimited time.

Essentially, the technical problem to be solved is to provide an alternating propulsion and generator motor in any use range to replace current motors powered by polluting fuels that are derived from oil and solid materials derived from carbon, and other fuels formed by industrial oils and gases.

### Background of the Invention

There are many electric generators and motors moved by motors consuming polluting energies which make it currently impossible to sufficiently correct environmental problems despite the intended and, to a large extent, applied alternative energies which, evidently and although not to a great extent, are useful for palliating this dangerous situation, but the investment is very expensive and it is not easy to progress in the large-scale project for its solution. The invention provides a very advantageous solution because, depending on the power of the motor of the invention, the generator can produce power on a large scale, taking into account that its operation will depend on the consumption that the motor itself makes of the power generated which, whatever the importance of the generating force used, will be much lower than the power developed and negligible with regard to the power used up; which is started with a simple and normal AC/DC power source, even eliminating the intervention of other pseudo-polluting power sources.

Motors of this type are not known in the state of the art, the closest state of the art being:
Patent ES 2 000 068 of J. R. Baez D. et al. for "ELECTROMAGNETIC ROTARY MOTOR", which usually incorporates a battery, a starter motor and an electric generator, has as essential features the action by repulsion of magnetic field of the same sign, one of these fields being created by a series of electromagnets to which an electric current is intermittently supplied through a breaker distributor, whereas the other field is created by a series of permanent magnets assembled in a rotor, the opposite surfaces of the electromagnets and of the magnets being provided with a certain eccentricity in relation to the rotor shaft so that the repulsion has a tangential component.
And other references:
   Patent ES 2 004 868 of F.M. Oron S. for "ELECTROMAGNETIC MOTOR".
   Patent ES 2 091 377 of Magnetospheric Power Corporation for "ELECTROMAGNETIC MOTOR".
   Patent ES 2 229 645 of Hutchinson for "ELECTROMAGNETIC MOTOR AND DEVICE FOR THE ACTIVE CONTROL OF THE VIBRATIONS COMPRISED BY AT LEAST SUCH MOTOR".

### Description of the Invention

The objective of the invention is achieved with the arrangement of two electromagnets or two assemblies of electromagnets in the form of a ring or cylinder, one of them being inside the other, such electromagnets being concentric, such that upon being electrically induced the internal electromagnet rotates, moving a shaft providing driving force and in turn actuating an AC/DC generator which will be responsible for supplying enough energy for it to continue rotating and of supplying externally usable energy. An external source, either a battery or electric power system, is in turn responsible for starting the operation of said assembly.

As a result, an advantageous solution of the invention is that of achieving a motor-generator made according to such invention, that of eliminating the CO₂ emissions in any type of similar use and reducing the production of decibels or noise pollution in any type of similar use.

A broader idea of the features of the invention is described below in reference to the sheets of drawings attached to this specification, in a rather schematic manner and only by way of example, representing the preferred and essential details of the invention. In the drawings
Figure 1 is a schematic view of the motor-generator of the invention.
Figure 2 shows the arrangement in series of several devices in the form of a ring.
Figure 3 is a view similar to the previous one in a version of cylinders.
Figure 4 is a schematic view of the assembly of electromagnets.
Figure 5 is a view similar to the previous one with emphasized parts.
Figure 6 is a example of another solution of moving encapsulated electromagnets.
Figure 7 is an example similar to the previous one of moving non-encapsulated electromagnets.
Figure 8 is an inner view of the casing for housing the electromagnets.
Figure 9 is a side perspective view of the rotating brushes or contacts.
Figure 9a is a schematic side view and front elevational view of the previous brushes or contacts.
Figure 10 schematically shows two versions of the segments integrating the rings of fixed electromagnets.
Figure 11 is an axial foreshortened perspective view of a toothed shaft bearing the moving electromagnets.
Figure 11a is a schematic view of the previous assembly enclosed in a housing.
Figure 12 is a perspective view of the rotating coupling of the generating shaft on the fixed shaft.

### A Preferred Embodiment of the Invention

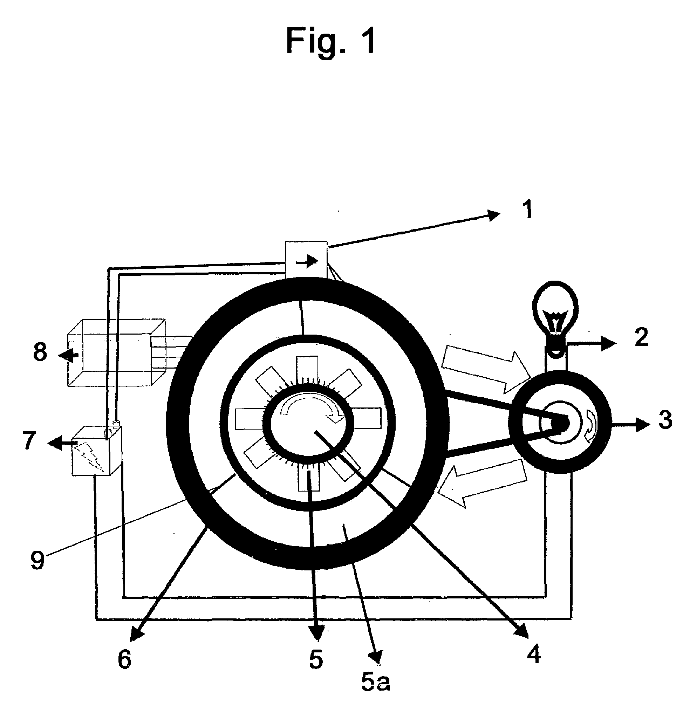

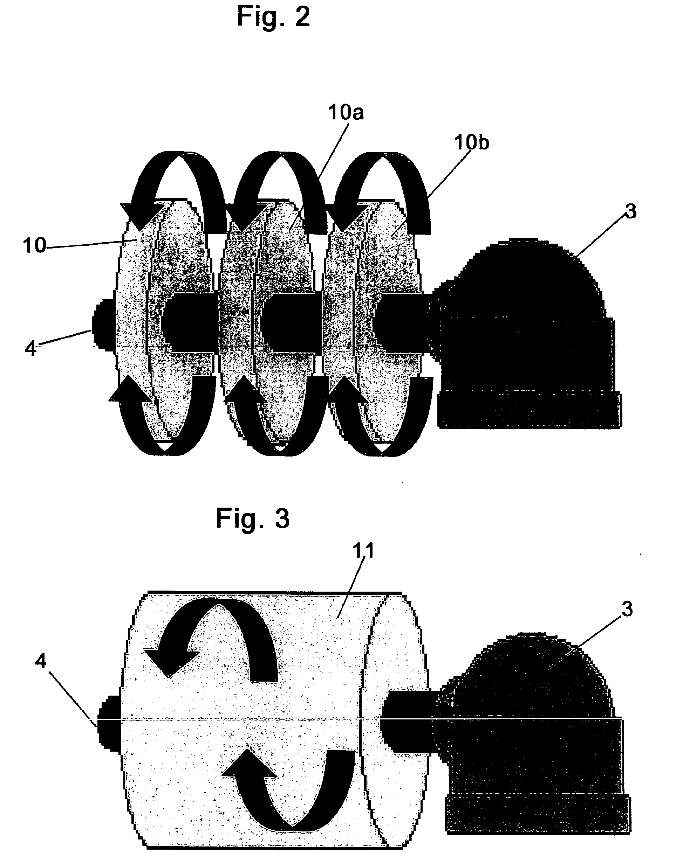

A preferred embodiment of the invention is developed in the previously described drawings such that the present invention relates to a device that can be used as a propulsion motor or as an electric generator/alternator, comprising electromagnets in a fixed ring (5a) inside which there is an assembly of electromagnets in the form of a blade (5) (Figure 1) such that the electromagnet or electromagnets forming the first ring (5a) houses this second electromagnet (5) having the function of moving an axial shaft or axle (4) which is connected by any direct or indirect system which in turn moves a usual or known external AC/DC electric generator (3) which is responsible for supplying electric power for external consumption (2) and the electric power for the self-operation of the assembly, regulated by a potentiometer (1), for increasing the energy power, having the polarization of the rings (5) and (5a) controlled, which can reverse the polarity by selecting the positive or negative field according to the needs of the assembly, synchronizing it electronically or mechanically by means of sensors (8) placed in the first ring (5a). The assembly is confined in a casing (6) which isolates the electromagnetic energy and which can be made in any type of shape and size so that it can be adapted to any use. The most common shape would be that of coaxially assembled rings forming modular bases, or else coaxially assembled cylinders also forming modular bases (Figures 2 and 3). The motor of the invention uses the electric power for self-powering itself, generating it and re-powering itself, conferring the assembly enormous versatility with practical uses and an almost complete autonomy, since it depends on an external connection, either of a DC battery or of the AC electrical network, to begin to operate for a theoretically unlimited time, its composition and therefore the driving electric power to be supplied being able to be modularly increased.

Thus, an example of the modular composition (Figure 2) is integrated by a set of rings (10,10a, 10b), joined to an electric generator (3) by means of a drive shaft (4), being an embodiment in modular form of one cylinder (11) or more (Figure 3) joined to an electric generator (3) by means of the drive shaft (4).

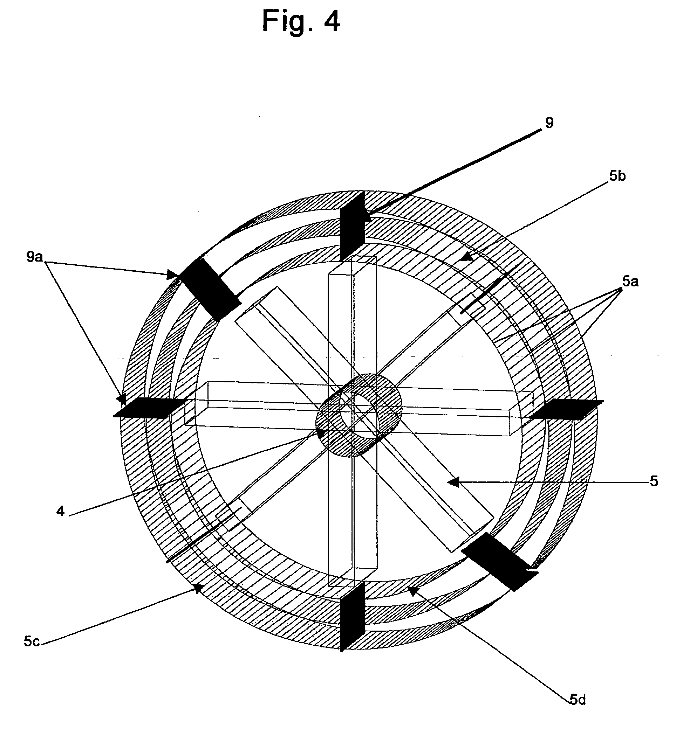

The assembly of electromagnets in the form of rings which is schematically shown in Figure 4 is formed by spacers (9) therebetween which provide it with a circumferential arc shape which, once joined, form the second fixed ring (5a) forming the neutral area of the electromagnets (5b), (5) being the electromagnets of the first ring in the form of radial bars and (5d) being the positive area of the fixed electromagnet and only (5c) the negative area thereof. This assembly of concentric annular electromagnets is assembled in the drive shaft (4), the purpose of which is to rotate it to provide driving electric force, (9a) being the dimension or separation of the segments in the form of an arc of a fixed electromagnet (5a).

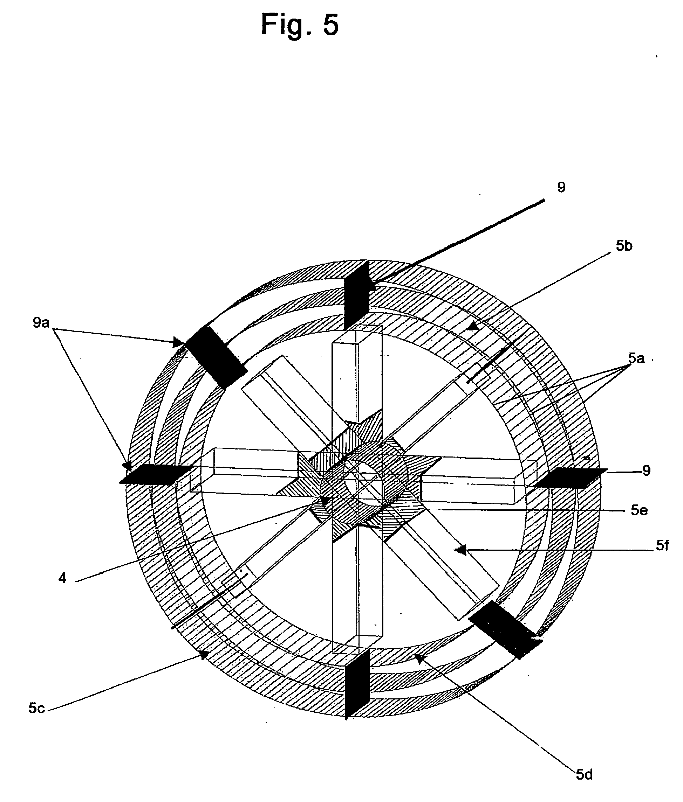

This same assembly is shown in Figure 5 in a striped area to emphasize the different members, areas of fields thereof in which (5b) is the neutral area of the fixed electromagnets of the second ring (5a); (9) are the spacers of the electromagnets; (5c) is the negative area of the fixed electromagnets of the second ring; (5d) is the positive area thereof; (5f) is the positive area of the moving electromagnets of the first ring (5) and (5e) is the negative area of the mentioned first ring; (4) is the shaft which must be moved by the moving electromagnets of the first ring in which they are assembled and (9) indicates the dimension of a segment of a fixed electromagnet in the form of an arc. in the form of rings.

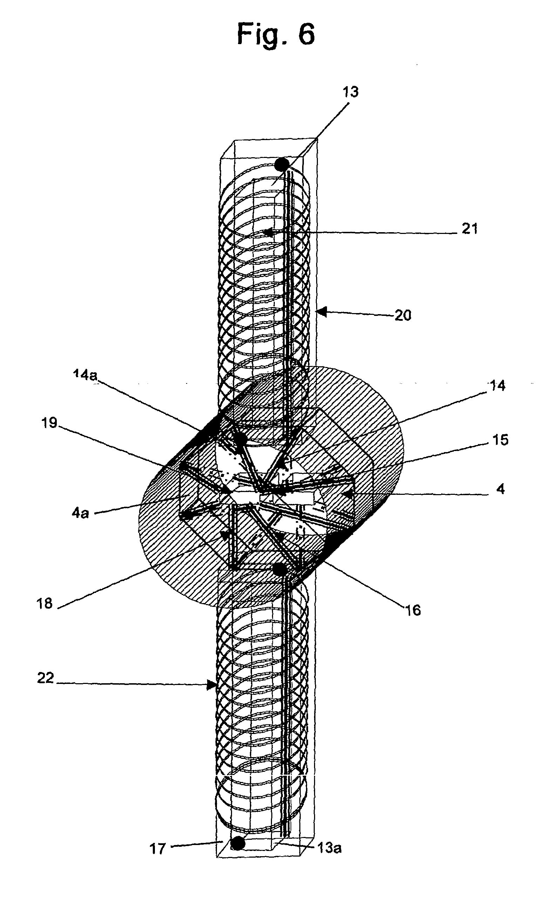

Among the capacities ot the invention, in another version the electromagnetic elements are arranged in the form of helical members or radial solenoids, for example (21) and (22) diametrically opposite on a preferably polygonal support (4a) on the drive shaft or axle (4) and in a radial arrangement which, upon being induced by the effect of the electric current through their corresponding conductors and contacts, move rotating and actuating said shaft (Figure 6). The solenoids (21) and (22) are assembled in corresponding iron core (13) and (13a) respectively and encapsulated by protections (17) and (20); they are provided with respective power leads of either sign, (14) and (14a) being the positive and negative of the electromagnet (21), and (16) and (18) being the positive and negative of the electromagnet (22), and inside the drive shaft (4) there are arranged moving satellite contacts, (15) being the positive one and (19) being the negative one, which will distribute the current through the induced phase.

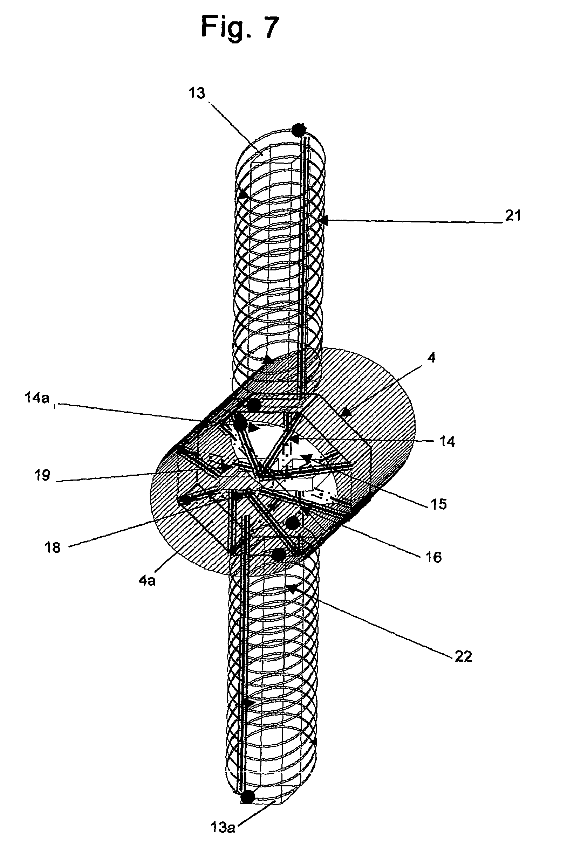

Another version of the invention (Figure 7) comprises the two moving helical electromagnet solenoids (21) and (22) of the second ring (5a) without a containing capsule and assembled on the shaft (4) which they must move, being formed by a weld contact or the like of the positive connection of the first electromagnet (21) to the coils thereof, (4a) being the mentioned support on which the electromagnets are assembled.

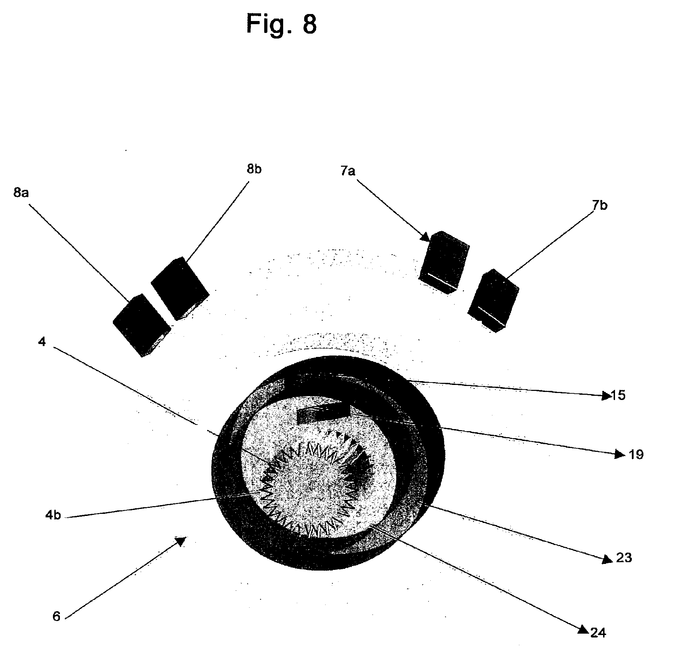

Figure 8 shows the casing (6) containing the assembly of electromagnets traversed by the shaft or axle (4) moving the assembly of moving electromagnets of the starting system; comprising the positive (8a) and negative (8b) polarity control input contacts of the electric power necessary for the operation of the motor, internally having positive rotating satellite brushes or contacts (15) and negative rotating satellite brushes or contacts (19) and positive fixed/rotating conductive plates (24) made of copper or conductive material and negative fixed/rotating conductive plate (23) made of copper of conductive material. It externally has positive (7a) and negative (7b) electric contacts for the external AC/DC power connection for the necessary start-up of the starter electromagnetic assembly of the previous assembly.

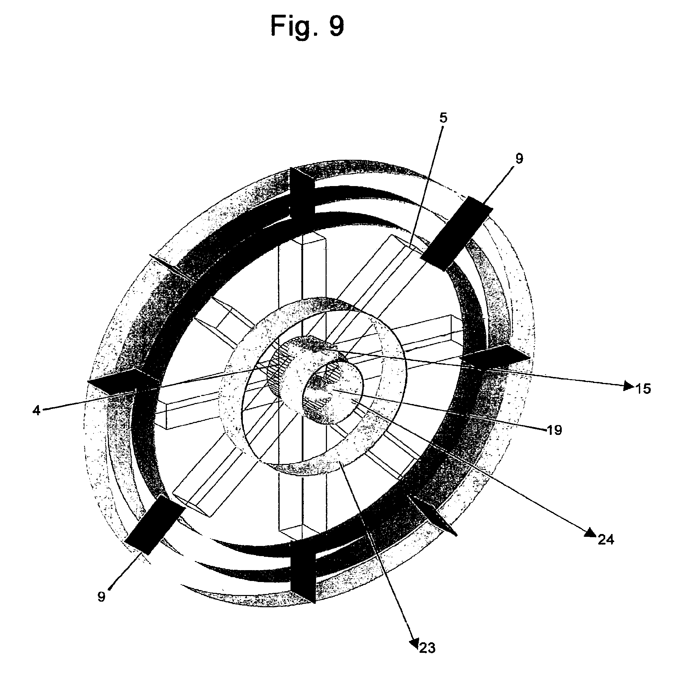

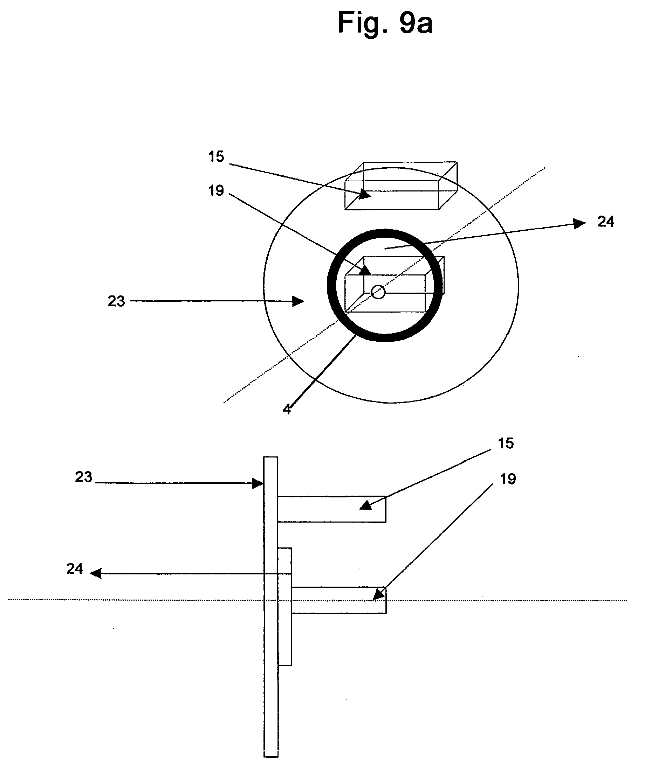

The core of the previous assembly is shown in Figure 9, in a schematic perspective view and in 9a in an also schematic side and front elevational views, showing the negative rotating satellite brushes or contact (19) and the positive rotating satellite brushes or contact (15) in relation to the negative fixed/rotating conductive plates (24) made of conductive material, copper or another material and the positive fixed/rotating conductive plate (23) made of conductive material, copper or another material.

One of the fixed electromagnets (5a) shown as a copper coil in Figure 9a, having the assembly of moving electromagnets (5) responsible for moving a transmission axle or shaft (4), consists of a negative electromagnet area (24), a positive electromagnet area (23) and a neutral electromagnet area between both.

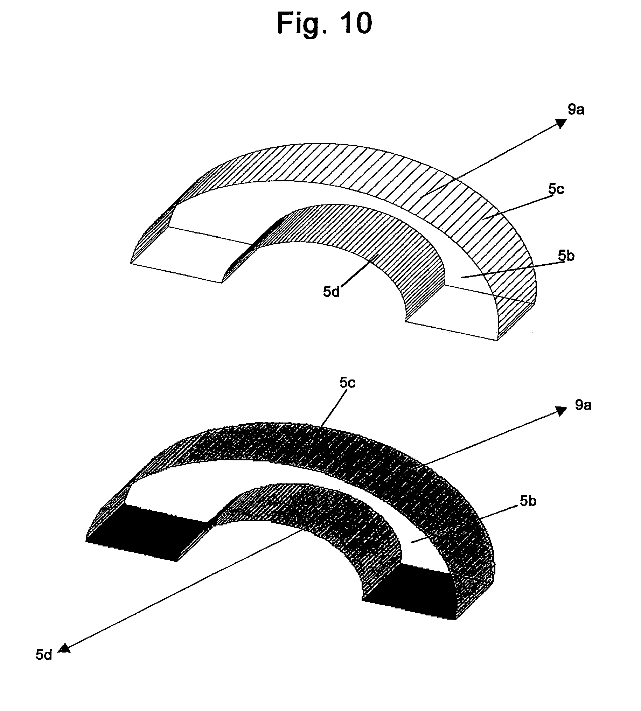

Figure 10 shows one of the circumferential arc segments (9a) integrating the fixed electromagnetic ring (5a) containing the negative (5c); positive (5d) and neutral (5b) magnetic fields which are spaced by the spacers (9) of Figure 1.

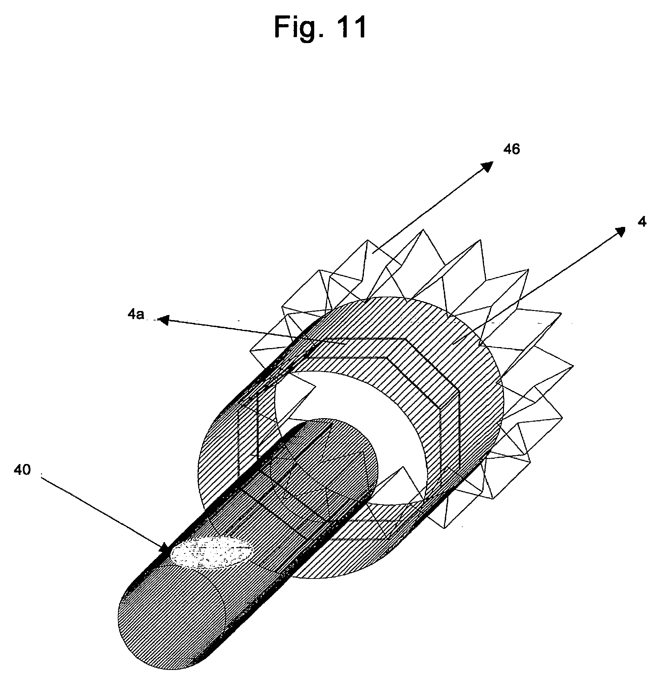

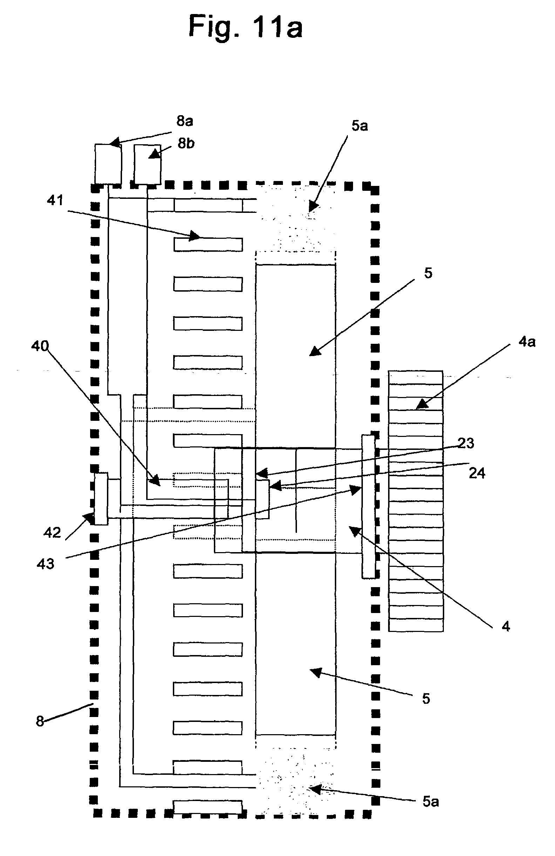

A perspective view of the main transmission axle or shaft (4) shown in Figure 11 consists internally of the support (4a) of the helical electromagnets or moving solenoids (21) (22) and coaxially of the fixed shaft for fixed S/E winding (40) and externally of a gear ring (4b) for moving other external generator devices which will correspond to the assembly shown in Figure 11a, being completed with the contact plate (23), (24); the supports of the shaft (42) (43), the mentioned external electric contacts (8a), (8b); the casing (8) enclosing the assembly provided in this case with ventilation or cooling slits (41); with the body of fixed electromagnets (5a) and internally with the moving electromagnets (5).

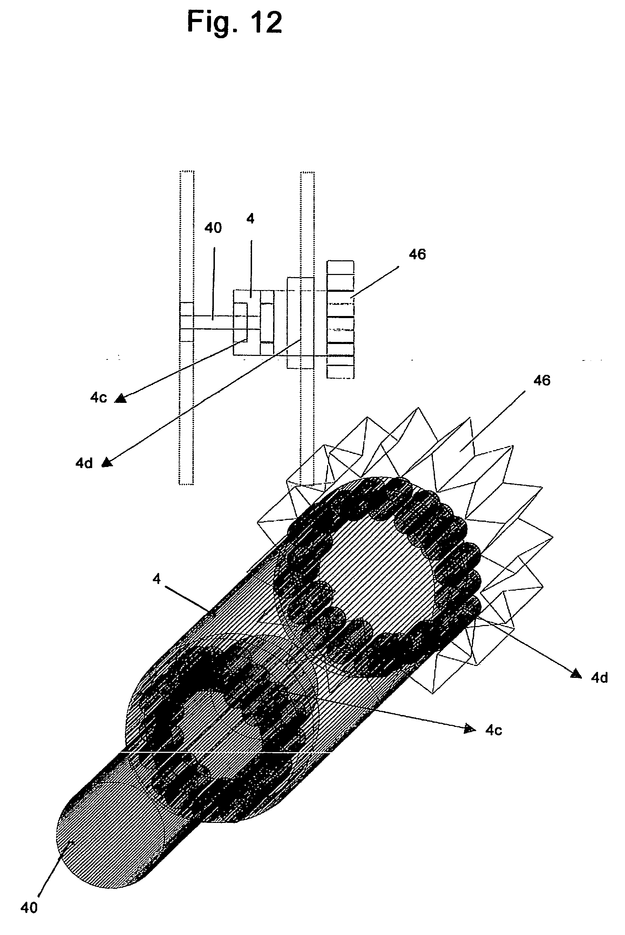

Figure 12 offers a solution of the assembly of the transmission drive shaft (4) in the fixed coaxial shaft (4a) by means of corresponding sets of internal (4c) and external (4d) bushings at each of the ends of the former, making it much easier to start and rotate the transmission drive shaft (4) .

The foregoing is a schematic version of a possible simple embodiment.

Having sufficiently described the nature of the invention it is stated for the relevant purposes that such invention is not limited to the exact details set forth herein, but rather on the contrary, the modifications considered to be appropriate will be introduced therein, provided that the essential features thereof, which are claimed below, are not altered.

## Claims

1. An electromagnetic motor self-powered by an external AC/DC generator, wherein an external source, either a battery or electric power system, electrically induces the electromagnets of the motor, **characterized in that** it has a first fixed electromagnetic ring (5a) and an inner moving electromagnetic rotating blade (5) controlled by means of positive (8a) and negative (8b) polarity control members in charge of synchronizing the polarities (5c and 5b) of the fixed electromagnets (5a) and (5e), (5f) of the moving electromagnets (5) such that the equal polarity always exerts a repulsion force depending on the energy supplied to the electromagnets, and such electromagnets cause a rotation, both in one direction and the opposite direction, of the electromagnets by magnetically repelling one another, which electromagnets, being or being arranged in the form of a blade (5) housed inside the first fixed electromagnet (5a), have the purpose of providing a driving force and of moving both external direct current and alternating current electric power alternators or generators (3), and a potentiometer (1) in charge of regulating the power supply to the electromagnets.

2. The electromagnetic motor self-powered by an external AC/DC generator according to claim 1, the preceding assembly is **characterized in that** it is confined in a casing (6) which isolates the electromagnetic energy.

3. The electromagnetic motor self-powered by an external AC/DC generator according to claim 1, an example of the modular composition of the assembly is **characterized in that** it is formed by a set of electromagnetic rings (10,10a, 10b), connected to an electric generator (3) by means of a drive shaft (4), or in the modular form of one or more cylinders (11) connected to an electric generator (3) by means of a drive shaft (4).

4. The electromagnetic motor self-powered by an external AC/DC generator according to claims 1 and 3, the assembly of electromagnets in the form of rings is **characterized in that** they are formed by spacers (9) between them which give them the form of a circumferential arc which, once connected, form a second fixed ring (5a) forming the neutral area of the electromagnets (5b), (5) being the electromagnets of the first ring in the form of radial bars and (5d) being the positive area of the fixed electromagnet (5a) and (5c) the negative area thereof. This assembly of concentric annular electromagnets is assembled in the drive shaft (4), the purpose of which is to rotate it to provide an electrical driving force, (9a) being the dimension or separation of the segments in the form of an arc of a fixed electromagnet (5a).

5. The electromagnetic motor self-powered by an external AC/DC generator according to claim 1, another version of the electromagnetic motor of the invention is **characterized in that** it has diametrically opposite helical members or radial solenoids (21) and (22) on a support (4a) on the drive shaft or axle (4) and radially arranged which move when induced due to the effect of the electric current, said shaft (4) rotating and actuating the electromagnets (21) and (22) which are assembled in a corresponding iron core (13) and (13a) and encapsulated or not by protections (17) and (20); being provided with respective power leads of either sign, (14) and (14a) being the positive and negative of the electromagnet (21) and (16) and (18) the positive and negative of the electromagnet (22), and inside the drive shaft (4) there are arranged the positive (15) and negative (19) moving satellite contacts which will distribute the current through the induced phase.

6. The electromagnetic motor self-powered by an external AC/DC generator according to claims 1 and 2, the electromagnetic motor contained in the casing (6) with the assembly of electromagnets traversed by the shaft or axle (4) moving the assembly of moving electromagnets of the starting system is **characterized in that** it comprises the positive (8a) and negative (8b) polarity control input contacts of the electric power necessary for the autonomous operation of the motor, internally having positive rotating satellite brushes or contacts (15) and negative rotating satellite brushes or contacts (19) and positive fixed/rotating conductive plates (24) made of copper or conductive material and negative fixed/rotating conductive plate (23) made of copper of conductive material and externally having positive (7a) and negative (7b) electric contacts for the external AC/DC power connection necessary for the start-up.

7. The electromagnetic motor self-powered by an external AC/DC generator according to claims 1 and 2, the composition of the ring of the fixed electromagnet is **characterized in that** it is integrated by circumferential arc segments (9a) containing the negative (5c); positive (5d) and neutral (5b) magnetic fields which are spaced by the spacers (9).

8. The electromagnetic motor self-powered by an external AC/DC generator according to claim 1, the composition of the shown main shaft or transmission axle (4) is **characterized in that** it consists coaxially of the fixed shaft for fixed S/E winding (40) and externally of a gear ring (4b) for moving other external generator devices; supports of the shaft (42) (43) and the mentioned external electric contacts (8a), (8b) and a casing (8) enclosing the assembly provided in this case with ventilation or cooling slits (41).

9. The electromagnetic motor self-powered by an external AC/DC generator according to claims 1 and 8, a solution of the assembly of the transmission drive shaft (4) in the fixed coaxial shaft (4a) is **characterized in that** it consists of corresponding sets of internal (4c) and external (4d) bushings at each of the ends of the former.
